Europäisches Patentamt

**European Patent Office**

**Office européen des brevets**

(19)

(11) Publication number : **0 537 021 A2**

## (12) EUROPEAN PATENT APPLICATION

(21) Application number : **92309228.2**

(22) Date of filing : **09.10.92**

(51) Int. Cl.$^5$ : **G06F 15/64, H04N 5/225, H04N 15/00**

(30) Priority : **11.10.91 GB 9121646**

(43) Date of publication of application :
**14.04.93 Bulletin 93/15**

(84) Designated Contracting States :
**DE FR**

(71) Applicant : **GEC-MARCONI LIMITED**
**The Grove, Warren Lane**
**Stanmore, Middlesex HA7 4LY (GB)**

(71) Applicant : **INSTITUT NATIONAL DE**
**RECHERCHE EN INFORMATIQUE ET EN**
**AUTOMATIQUE**
**Domaine de Voluceau Rocquencourt B.P. 105**
**F-78153 Le ChesnayCédex (FR)**

(72) Inventor : **Maynbank, Stephen John**
**1 Harborne Close**
**South Oxhey, Watford, WD1 6TZ (GB)**
Inventor : **Faugeras, Olivier Dominique**
**969 Avenue de Pierrefeu**
**F-06560 Valbonne (FR)**

(74) Representative : **Kirby, Harold Victor Albert**
**The General Electric Company, p.l.c. GEC**
**Patent Department Wembley Office Hirst**
**Research Centre East Lane**
**Wembley Middlesex HA9 7PP (GB)**

(54) **Camera-calibration in a computer vision system.**

(57) In a camera arrangement of a computer vision system, camera calibration is effected on-line, i.e. while the camera is involved in a visual task. The calibration is carried out automatically whenever the camera undergoes a series of displacements relative to a fixed scene. The calibration method is based on the epipolar transformation associated with each displacement, using Kruppa equations to derive the calibration signals.

Figure 2.

obtain $n$ epipolar transformations (ET)

for each ET obtain Kruppa's eqns

use the $n$ sets of Kruppa eqns to update the estimate of the calibration

EP 0 537 021 A2

This invention relates to camera systems, and particularly to computer vision systems.

In the art of computer vision the calibration of a camera is an important task. This is the determination of the intrinsic parameters of a single camera, that is to say the geometry of the projection from space to the camera image. Under parametisation each point q in the image corresponds to the line in space that projects down to q, and determination of the camera calibration is equivalent to determining a function $(q_1,q_2) \mapsto f(q_1,q_2)$ defined on pairs of image points such that $f(q_1,q_2)$ is the angle between two rays projecting down to $q_1,q_2$ respectively, it being assumed that the mapping from three dimensional space to the camera image is approximated by a linear projection.

The usual method is to calculate the parameterisation from one or more images of an object of known size and shape. The calibration object is chosen in order to make the calculation as simple and as stable as possible. A common choice is a flat plate with a regular pattern marked on it. A problem with the usual method is that it is impossible to calibrate on-line, whilst the camera is involved in a visual task. Any changes in the camera calibration cannot be corrected without interrupting the task. The changes may be deliberate, for example the focal length of the camera may be adjusted, or they may be accidental, for example the camera may undergo small mechanical or thermal changes.

An object of the invention is to provide a system for detemining camera calibration which is effective on-line whenever the camera undergoes a series of displacements with respect to a rigid scene, the system being useable whenever the mapping from three dimensional space to the camera image is sufficiently well approximated by a linear projection, and whenever the computer vision system incorporates means to determine epipolar transformations associated with displacements of the camera, so as to produce measurement signals representative thereof. In accordance with the invention such a computer vision system incorporates a conversion circuit capable of deriving from said signals by means of Kruppa equations respective camera calibration signals, and utilising said calibration signals to calibrate the camera.

In some cases the step of determining the epipolar transformations is arranged to be carried out repeatedly, so as to produce a sequence of measurement signals, the conversion circuit being arranged to derive therefrom a sequence of calibration signals, so as to update the camera calibration continuously as the camera moves.

Alternatively the step of determining the epipolar transformations is arranged to be carried out n times, and the camera calibration is derived only after said n epipolar transformations.

The camera calibration is preferably based on the relation between the epipolar transformation and the absolute conic, which is a non-singular conic $\omega$ in the plane at infinity which is invariant under the rigid motions of space.

Camera calibration based on the theory of the absolute conic has some similarities with camera calibration based on images of a known physical object, but has at least three advantages over it. Firstly, the absolute conic is independent of the position and orientation of the camera, secondly, specifying the camera calibration is equivalent to specifying the image of the absolute conic, and thirdly the position of the absolute conic in mathematical terms is expressible exactly.

The invention will be further explained as follows.

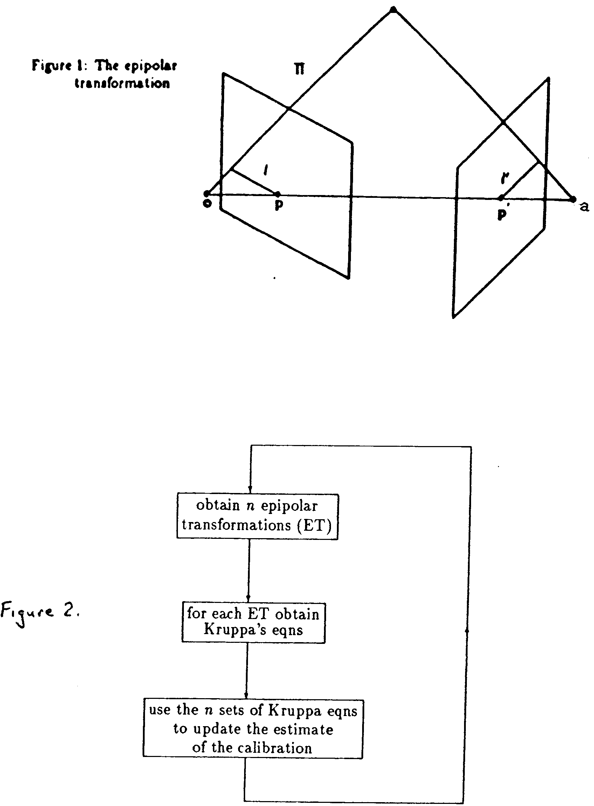

Let two images of a scene be taken from different viewpoints by the same camera as illustrated in Figure 1. Let o be position of the optical centre of the camera when the first image is taken and let a be the position of the optical centre when the second image is obtained. The projection of the line (o,a) into the first image is the epipole p and the projection of (o,a) into the second image is the epipole p′. The epipolar transformation is a bilinear correspondence between the image lines through p and the image lines through p′. Let $\Pi$ be any place in space containing (o,a). Then $\Pi$ projects to an epipolar line l in the first image and to an epipolar line l′ in the second image such that l and l′ correspond under the epipolar transformation. The epipolar transformation is a well known construction in computer vision described in many places, for example in "Robot Vision" by B.K.F. Horn, published in 1986 by MIT Press.

The epipolar transformation is linked to the camera calibration by the Kruppa equations, which are well known mathematical equations, but have not hitherto been used for camera calibration. However the programming of a computer for deriving the calibration signals, which are used to calibrate the camera in accordance with the invention, is well within the province of those skilled in the art. In these equations in accordance with the invention the camera calibration is described in terms of the image of the absolute conic. The conic $\omega$ is determined by the calibration, and conversely if $\omega$ is given then the calibration is uniquely determined. The equation for $\omega$ is the same in both images because both images are taken by the same camera.

Let $l_t$ be a general epipolar line through p, parameterised by the projective co-ordinate t, and let $l'_t$ be the corresponding line through p′. Then $l_t$ is tangent to $\omega$ if and only if $l'_t$ is tangent to $\omega$. Let D be the matrix of the dual conic to $\omega$ in a convenient co-ordinate system. Then $l_t$ is tangent to $\omega$ if and only if $l_t^T D l_t = O$, and similarly $l'_t$ is tangent to $\omega$ if and only if $l_t^{T'} D l'_t = O$.

2

Thus the following two equations in t have the same roots,

$$l_t^T D l_t = O$$
$$l'_t{}^T D l'_t = O \quad (1)$$

The equations (1) are both quadratic in t. They have the same roots, thus the coefficients differ only by a scale factor. Let b,b′ vectors independent of t such that

$$l_t^T D l_t = b.(1,t,t^2)$$
$$l'_t{}^T D l'_t = b'.(1,t,t^2)$$

Kruppa's equations reduce to

$$b \times b' = O \quad (2)$$

Let A be the linear transformation defined such that $A^{-1}$ converts the given image into the image that would have been obtained by projection onto the unit sphere. The equation of $\omega$ is $x^T D^{-1} x = O$. The equation of the conic $A^{-1}(\omega)$ is $x^T A^T D^{-1} Ax = O$. Under projection to the unit sphere the image of the absolute conic is x.x = O. It follows that $A^T D^{-1} A = I$, where I is the identity matrix. The matrix D is given in terms of A by $D = AA^T$. The Kruppa equations (2) are homogeneous of degree two in the entries of D. they are thus homogeneous of degree four in the entries of A.

Figure 2 represents a flow chart illustrating one method of implementing the invention.

In the flow chart the variable $n \geqq 1$ is set by the user. In one arrangement in accordance with the invention the algorithm cycles through the loop continuously updating the camera calibration as the camera moves. It is also possible to implement the algorithm as a serial calculation in which the camera calibration is estimated once only after accumulating a number n of epipolar transformations. In order to obtain a practical implementation it is recommended to use more than the theoretically minimum number of epipolar transformations. The additional epipolar transformations help to reduce the effects of small errors in the measurement of the epipolar transformations.

In the implementation a gradient based approach is used to solve the Kruppa equations, in which the algorithm begins with an estimate of the camera calibration and then finds a small change in the estimate which leads to a better consistency with the Kruppa equations. Programming the computer to solve the equations so as to derive the calibration signals for calibrating the camera will be well within the province of those skilled in the art.

Experiments have shown that the full camera calibration can be recovered. The usual parameters for describing the camera calibration are the optical centre, (i.e. the foot of the normal dropped from the focal point to the image plane), the length scales on the x and y axes in the image plane and the angle between the two axes. These five parameters can be recovered from the coefficients of the equation describing the image of the absolute conic.

In practice the moving camera is arranged to take two images of the same scene at different times. Feature points in the images are located and matched, and the epipolar transformation is estimated from the set of matched feature points. Feature point location, feature point matching, and the estimation of the epipolar transformation is achieved by computer using standard software developed in computer vision. Calibration signals for calibrating the camera are derived from the epipolar transformation by means of a computer utilising Kruppa equations as above described.

There are two Independent Kruppa equations relating the epipolar transformation to the five camera calibration parameters. Let these equations be k1 = O, k2 = O. Define the error function el by

$$el = k1\,k1 + k2\,k2$$

Error functions el, e2, e3, ...., en are obtained for n > = 1 motions of the camera. The functions are added to give a single error function

$$e = e1 + e2 + .... + en$$

The camera calibration parameters are an approximate solution to the equation e = O. The solution is not exact because of the effects of small errors in the image data. The equation e = O is used to update the camera calibration parameters using standard methods for solving non-linear equations. One such method is the following, based on Newton's method. Let q1 kbe the current estimate of the camera calibration. Then compute a small change dq1 such that

$$e(q1 + dq1) = \text{terms second order in } dq1$$

The new estimate q2 of the camera calibration is q2 = q1+dq1.

The procedure is repeated for each new sequence of images obtained by the camera. For each sequence an equation e = O is obtained from the Kruppa equations and a new estimate qi+dqi obtained by updating the previous estimate qi. The sequence q1, q2, q3 ... converges to the true camera calibration.

The accompanying Appendix illustrates an example of the derivation of calibration signals utilising Kruppa equations.

# APPENDIX

# Self-Calibration Using Epipolar Transformations

## 1  Introduction

The calibration of a single camera is an important task in computer vision. The aim of the calibration is to find the parameterisation of the lines through the optical centre of the camera defined by the points of the image. Under the parameterisation, each point $q$ in the image corresponds to the line in space that projects down to $q$. It is assumed that the parameterisation is linear. The usual method is to calculate the parameterisation from one or more images of an object of known size and shape. The calibration object is chosen in order to make the calculation as simple and as stable as possible. A common choice is a flat plate with a regular pattern marked on it [9, 10]. A problem with the usual method is that it is impossible to calibrate on-line, whilst the camera is involved in a visual task. Any changes in the camera calibration cannot be corrected without interrupting the task. The changes may be deliberate, for example, the focal length of the camera may be adjusted, or they may be accidental, for example, the camera may undergo small mechanical or thermal changes.

In this paper a new method of camera calibration is described which can be carried out on-

line, whenever the camera undergoes a series of displacements with respect to a rigid scene. The calibration method is based on the epipolar transformation associated with each displacement. No further information about the displacement or about the positions of points in the field of view is required.

It is shown that the epipolar transformation for a single displacement imposes two algebraic constraints on the camera calibration. If two epipolar transformations from different displacements of the camera are available then there are four constraints on the camera calibration. The compatible calibrations are parameterised by an algebraic curve. If a third epipolar transformation is given then the camera calibration can be uniquely determined. The method is based on a geometric description of the camera calibration using the absolute conic. The absolute conic is a particular conic in the plane at infinity which is unchanged or invariant under any rigid displacement of space. The image of the absolute conic determines and is determined by the camera calibration. It provides a particularly efficient way of describing the camera calibration. In the usual approach, the calibration is described by a $4 \times 3$ matrix giving the transformation from $P^3$ to the image plane. The matrix is given up to a scale factor. It thus has 11 degrees of freedom. The entries depend on the camera calibration and on the position and orientation of the camera. In contrast, the image of the absolute conic has five degrees of freedom. It is independent of the position and orientation of the camera.

Camera calibration based on the absolute conic has some similarities with camera calibration based on images of a known object. There are at least three advantages in replacing the object by the absolute conic. Firstly, the absolute conic is independent of the position and orientation of the camera, secondly, specifying the camara calibration is equivalent to specifying the image of the absolute conic, and thirdly the position of the absolute conic is known exactly. The disadvantage is that the absolute conic is not a physical object 'really out there'.

The epipolar transformation and the connection between camera calibration and the absolute

conic are both described in §2. The curve $c$ parameterising the camera calibrations compatible with two epipolar transformations is obtained in §3. The properties of $c$ are investigated in §4. A representation of $c$ by a curve of degree six is obtained in §5. In §6 an algorithm is described for obtaining the camera calibration compatible with three epipolar transformations.

## 2  The epipolar transformation and the absolute conic

The epipolar transformation is a fundamental construction in computer vision that has been described in publications too numerous to list here. A description of the epipolar transformation is given in [4]. A brief résumé follows.

Let a camera take two images by projection from different positions, as shown in figure 2. Let $c$ be the optical centre of the camera for the first image, and let $c'$ be the optical centre for the second image. The line $\langle c, c' \rangle$ projects to a point $p$ in the first image, and to a point $p'$ in the second image. The points $p$, $p'$ are the epipoles. The lines through $p$ in the first image and the lines through $p'$ in the second image are by definition the epipolar lines. Let $\Pi$ be any plane containing $\langle c, c' \rangle$. Then $\Pi$ projects to an epipolar line $l$ in the first image and to an epipolar line $l'$ in the second image. The correspondence $\Pi \overline{\wedge} l$ is a homography between the pencil of epipolar lines in the first image and the pencil of planes containing $\langle c, c' \rangle$, because it is a correspondence between the elements of two 1-dimensional projective spaces that preserves the cross ratio. Similarly, there is a second homography, $\Pi \overline{\wedge} l'$. The resulting homography, $l \overline{\wedge} l'$, is by definition the epipolar transformation.

The absolute conic is a non-singular conic $\Omega$ in the plane at infinity which is invariant under the rigid motions of space. A Cartesian coordinate system is one in which $\Omega$ is defined by the equations

$$x_4 = 0 \qquad\qquad x_1^2 + x_2^2 + x_3^2 = 0 \qquad\qquad (1)$$

Figure 1: The epipolar transformation

The equations (1) for $\Omega$ have real coefficients, but $\Omega$ has no real points. The absolute conic $\Omega$ projects down to a conic $\omega$ in the image taken by the camera. The invariance of $\Omega$ under rigid displacement ensures that $\omega$ is independent of the position and orientation of the camera. If the camera calibration is known then $\omega$ can be found by calculating the projection of $\Omega$, after placing the camera in any convenient position. Conversely, if a conic $\omega$ is given in the image plane then there is a unique camera calibration such that $\omega$ is the image of $\Omega$ [2].

An epipolar transformation constrains the camera calibration because the epipolar lines tangent to the projection of $\Omega$ in the first image correspond to the epipolar lines tangent to the projection of $\Omega$ in the second image. In detail, let $\Pi$ be a plane containing $(c, c')$, and tangent to $\Omega$. The tangency is preserved under projection to the image, thus the epipolar line $l$ obtained by projecting $\Pi$ into the first image is tangent to the projection of $\Omega$ into the first image, and similarly, the epipolar line $l'$ in the second image corresponding to $l$ is tangent to the projection of $\Omega$ into the second image. There are two planes $\Pi_1$, $\Pi_2$ tangent to $\Omega$, thus there are two pairs of corresponding tangents to the images of the absolute conic, $l_1 \overline{\wedge} l'_1$, and $l_2 \overline{\wedge} l'_2$. This correspondence between pairs of lines tangent to the image of $\Omega$ is denoted by

$$\{l_1, l_2\} \, \overline{\wedge} \, \{l'_1, l'_2\} \tag{2}$$

The camera calibration is the same for both positions of the camera. It is convenient to 'overlay' one image on the other and to work with a single projection $\omega$ of $\Omega$. The condition (2) yields two polynomial constraints on $\omega$, which are obtained in the next section.

# 3  Calibrations compatible with two epipolar transformations

The equations for the constraints on the image of the absolute conic arising from an epipolar transformation were first obtained by Kruppa [5], for the case in which the two images are taken by different cameras. The equations are rederived in §3.1 for the special case in which the images are taken by the same camera, with a fixed calibration. In §3.2 it is shown that the space of camera calibrations compatible with two epipolar transformations is parameterised by a space curve of degree seven contained in the intersection of two surfaces of degree three.

## 3.1  Kruppa's equations

It is shown that an epipolar transformation arising from a single camera displacement yields two algebraic constraints on the dual of the image $\omega$ of the absolute conic. Let $\mathbf{p}$, $\mathbf{p}'$ be the two epipoles. The two pencils of epipolar lines are parameterised by taking the intersection of each line with the fixed line $y_3 = 0$. Let $l$ be a line through the epipole $\mathbf{p}$ which meets $y_3 = 0$ at $(1, \tau, 0)^T$, and let $l'$ be the line through the second epipole $\mathbf{p}'$ corresponding to $l$ under the epipolar transformation. The line $l'$ meets the line $y_3 = 0$ at a point $(1, \tau', 0)^T$. The coordinate $\tau'$ is a bilinear function of $\tau$. The image coordinates are chosen such that $\tau' = \rho\tau$, where $\rho$ is a scalar depending on the epipolar transformation.

Let $(\mathbf{p}, \mathbf{y})$ be any line through $\mathbf{p}$. A point $\mathbf{x}$ is on the line $(\mathbf{p}, \mathbf{y})$ if and only if $(\mathbf{p} \times \mathbf{y}).\mathbf{x} = 0$. Let $D$ be the matrix of the dual conic of $\omega$, Dual($\omega$). The line $(\mathbf{p}, \mathbf{y})$ is tangent to $\omega$ if and only if

$$(\mathbf{p} \times \mathbf{y})^T D (\mathbf{p} \times \mathbf{y}) = 0 \qquad (3)$$

The entries of $D$ are defined to agree with the notation of Kruppa [5],

$$D = \begin{pmatrix} -\delta_{23} & \delta_3 & \delta_2 \\ \delta_3 & -\delta_{13} & \delta_1 \\ \delta_2 & \delta_1 & -\delta_{12} \end{pmatrix} \qquad (4)$$

On setting $y_3 = 0$ and using (4) to substitute for $D$ in (3) the following equation is obtained

$$0 = -\delta_{23}p_3^2 y_2^2 - \delta_{13}p_3^2 y_1^2 - \delta_{12}(p_1 y_2 - p_2 y_1)^2 - 2\delta_3 p_3^2 y_1 y_2 - 2\delta_2 p_3(p_1 y_2 - p_2 y_1)y_2$$

$$+ 2\delta_1 p_3(p_1 y_2 - p_2 y_1)y_1 \qquad (5)$$

Equation (5) has the form

$$A_{11}y_1^2 + 2A_{12}y_1 y_2 + A_{22}y_2^2 = 0 \qquad (6)$$

where $A_{11}$, $A_{12}$, $A_{22}$ are coefficients independent of $y$ defined by

$$A_{11} = -\delta_{13}p_3^2 - \delta_{12}p_2^2 - 2\delta_1 p_2 p_3$$

$$A_{12} = \delta_{12}p_1 p_2 - \delta_3 p_3^2 + \delta_2 p_2 p_3 + \delta_1 p_1 p_3$$

$$A_{22} = -\delta_{23}p_3^2 - \delta_{12}p_1^2 - 2\delta_2 p_1 p_3 \qquad (7)$$

The substitution of the inhomogeneous coordinates $1$, $\tau$ for $y_1$, $y_2$, in (6) yields

$$A_{11} + 2A_{12}\tau + A_{22}\tau^2 = 0 \qquad (8)$$

A similar argument yields an equation for $\tau'$.

$$A'_{11} + 2A'_{12}\tau' + A'_{22}\tau'^2 = 0 \qquad (9)$$

where $A'_{11}$, $A'_{12}$, $A'_{22}$ are defined by equations obtained from (7) by replacing the components $p_i$ of p with the components $p'_i$ of p'. On setting $\tau' = \rho\tau$ in (9) the equation

$$A'_{11} + 2A'_{12}\rho\tau + A'_{22}\rho^2\tau^2 = 0 \qquad (10)$$

is obtained. Equations (8) and (10) have the same roots for $\tau$ thus

$$\frac{A_{11}}{A_{12}} = \frac{A'_{11}}{\rho A'_{12}} \qquad\qquad \frac{A_{22}}{A_{12}} = \frac{\rho A'_{22}}{A'_{12}} \qquad (11)$$

The equations of (11) are Kruppa's equations for the special case in which the image of the absolute conic is the same in both images. They comprise two homogeneous equations of degree two in the coefficients of $D$.

## 3.2 The curve parameterising the possible camera calibrations

If two different epipolar transformations are available, arising from two different displacements of the camera, then four constraints on $\text{Dual}(\omega)$ are obtained. The space of plane conics is parameterised by the points of $\mathbf{P}^5$. Each of the four constraints defines a hypersurface in $\mathbf{P}^5$. The intersection of the four hypersurfaces is an algebraic set of dimension $5 - 4 = 1$. The intersection is thus the union of one or more irreducible algebraic curves. In fact, the intersection consists of four irreducible algebraic curves, but only one of them, denoted by $c$, parameterises the camera calibrations compatible with the two epipolar transformations. The other three components arise because of the particular way in which Kruppa's equations are expressed.

It is desirable to obtain a representation of $c$ by a curve of low degree, in order to simplify as much as possible the task of finding the camera calibration most nearly compatible with three or more epipolar transformations. As a first step, it is shown that $c$ can be represented by a curve of degree seven in $\mathbf{P}^3$. We use $c$ to refer to the curve in $\mathbf{P}^5$ and to the curve in $\mathbf{P}^3$, etc. If it is necessary to distinguish the different representations then the notation $c'$, $c''$, etc. is used.

The construction of the curve of degree seven depends on a particular choice of coordinates in the image plane. Let the centres of the two pencils of epipolar lines in the first epipolar transformation be at $p_1$, $p_1'$, and let the centres of the two pencils of epipolar lines in the second epipolar transformation be at $p_2$, $p_2'$. The coordinates of $p_i$, $p_i'$ are

$$p_i = (p_{i1}, p_{i2}, p_{i3})^\mathsf{T} \qquad\qquad p_i' = (p_{i1}', p_{i2}', p_{i3}')^\mathsf{T}$$

The homography between the lines through $p_1$ and the lines through $p_1'$ is denoted by $\overline{A}_1$, and the homography between the lines through $p_2$ and the lines through $p_2'$ is denoted by $\overline{A}_2$.

Coordinates are chosen in the image plane such that the equations (11) are obtained in the same form for both epipolar transformations. This is done as follows. Steiner's theorem [7] states that there exists a unique conic $s_1$ containing $\mathbf{p}_1$ and $\mathbf{p}_1'$ such that $\mathbf{y}$ is a point of $s_1$ if and only if $\langle \mathbf{p}_1, \mathbf{y} \rangle \overline{\mathcal{K}}_1 \langle \mathbf{p}_1', \mathbf{y} \rangle$. Similarly, there exists a unique conic $s_2$ through $\mathbf{p}_2$ and $\mathbf{p}_2'$ such that $\mathbf{y}$ is a point of $s_2$ if and only if $\langle \mathbf{p}_2, \mathbf{y} \rangle \overline{\mathcal{K}}_2 \langle \mathbf{p}_2', \mathbf{y} \rangle$. Let coordinates be chosen such that two of the intersections of $s_1$ and $s_2$ are at $(1,0,0)^T$ and $(0,1,0)^T$, respectively. It follows from this choice of coordinates that

$$\langle \mathbf{p}_1, (1,0,0)^T \rangle \quad \overline{\mathcal{K}}_1 \quad \langle \mathbf{p}_1', (1,0,0)^T \rangle$$

$$\langle \mathbf{p}_1, (0,1,0)^T \rangle \quad \overline{\mathcal{K}}_1 \quad \langle \mathbf{p}_1', (0,1,0)^T \rangle \tag{12}$$

The epipolar lines through $\mathbf{p}_1$ and $\mathbf{p}_1'$ are parameterised by their intersections with the line $y_3 = 0$. Let $(1, \tau, 0)^T$ be an arbitrary point of the line $y_3 = 0$. Because $\overline{\mathcal{K}}_1$ is a homography it follows that there exist constants $a, b, c$ and $d$ such that

$$\langle \mathbf{p}_1, (1, \tau, 0)^T \rangle \overline{\mathcal{K}}_1 \langle \mathbf{p}_1', (a\tau + b, c\tau + d, 0)^T \rangle \tag{13}$$

It follows from (12) and (13) that $a = 0$ and $d = 0$. Let $\rho_1 = c/b$. It follows from (13) that

$$\langle \mathbf{p}_1, (1, \tau, 0)^T \rangle \overline{\mathcal{K}}_1 \langle \mathbf{p}_1', (1, \rho_1 \tau, 0)^T \rangle \quad .$$

Similarly, there exists a scalar $\rho_2$ depending only on $\overline{\mathcal{K}}_2$ and the choice of coordinates such that

$$\langle \mathbf{p}_2, (1, \tau, 0)^T \rangle \overline{\mathcal{K}}_2 \langle \mathbf{p}_2', (1, \rho_2 \tau, 0)^T \rangle$$

With this choice of coordinates, the derivation of Kruppa's equations, as described in §3.1, applies to both epipolar transformations simultaneously, to yield four constraints on the matrix $D$ of the conic Dual($\omega$), with entries defined by (4). The four equations are

$$\frac{\delta_{13} p_{13}^2 + \delta_{12} p_{12}^2 + 2\delta_1 p_{12} p_{13}}{A_{12}} = \frac{1}{\rho_1} \frac{\delta_{13} p_{13}'^2 + \delta_{12} p_{12}'^2 + 2\delta_1 p_{12}' p_{13}'}{A_{12}'}$$

$$\frac{\delta_{23}p_{13}^2 + \delta_{12}p_{11}^2 + 2\delta_2 p_{11}p_{13}}{A_{12}} = \rho_1 \frac{\delta_{23}p_{13}'^2 + \delta_{12}p_{11}'^2 + 2\delta_2 p_{11}'p_{13}'}{A_{12}'}$$

$$\frac{\delta_{13}p_{23}^2 + \delta_{12}p_{22}^2 + 2\delta_1 p_{22}p_{23}}{B_{12}} = \frac{1}{\rho_2} \frac{\delta_{13}p_{23}'^2 + \delta_{12}p_{22}'^2 + 2\delta_1 p_{22}'p_{23}'}{B_{12}'}$$

$$\frac{\delta_{23}p_{23}^2 + \delta_{12}p_{21}^2 + 2\delta_2 p_{21}p_{23}}{B_{12}} = \rho_2 \frac{\delta_{23}p_{23}'^2 + \delta_{12}p_{21}'^2 + 2\delta_2 p_{21}'p_{23}'}{B_{12}'} \qquad (14)$$

The denominators $A_{12}$, $A_{12}'$ in (14) are defined by

$$A_{12} = \delta_{12}p_{11}p_{12} - \delta_3 p_{13}^2 + \delta_2 p_{12}p_{13} + \delta_1 p_{11}p_{13}$$

$$A_{12}' = \delta_{12}p_{11}'p_{12}' - \delta_3 p_{13}'^2 + \delta_2 p_{12}'p_{13}' + \delta_1 p_{11}'p_{13}'$$

in agreement with (7). Similarly, the denominators $B_{12}$, $B_{12}'$ are defined by

$$B_{12} = \delta_{12}p_{21}p_{22} - \delta_3 p_{23}^2 + \delta_2 p_{22}p_{23} + \delta_1 p_{21}p_{23}$$

$$B_{12}' = \delta_{12}p_{21}'p_{22}' - \delta_3 p_{23}'^2 + \delta_2 p_{22}'p_{23}' + \delta_1 p_{21}'p_{23}'$$

On solving the first and third equations of (14) for $\delta_{13}$ the following two equations are obtained

$$\delta_{13}(\rho_1 A_{12}'p_{13}^2 - A_{12}p_{13}'^2) = A_{12}(\delta_{12}p_{12}'^2 + 2\delta_1 p_{12}'p_{13}') - \rho_1 A_{12}'(\delta_{12}p_{12}^2 + 2\delta_1 p_{12}p_{13})$$

$$\delta_{13}(\rho_2 B_{12}'p_{23}^2 - B_{12}p_{23}'^2) = B_{12}(\delta_{12}p_{22}'^2 + 2\delta_1 p_{22}'p_{23}') - \rho_2 B_{12}'(\delta_{12}p_{22}^2 + 2\delta_1 p_{22}p_{23}) \qquad (15)$$

On eliminating $\delta_{13}$ from the equations of (15) a cubic equation

$$c_1(\delta_1, \delta_2, \delta_3, \delta_{12}) = 0 \qquad (16)$$

is obtained, where $c_1$ is defined by

$$c_1 = (\rho_1 A_{12}'p_{13}^2 - A_{12}p_{13}'^2)\left[B_{12}(\delta_{12}p_{22}'^2 + 2\delta_1 p_{22}'p_{23}') - \rho_2 B_{12}'(\delta_{12}p_{22}^2 + 2\delta_1 p_{22}p_{23})\right]$$

$$-(\rho_2 B_{12}'p_{23}^2 - B_{12}p_{23}'^2)\left[A_{12}(\delta_{12}p_{12}'^2 + 2\delta_1 p_{12}'p_{13}') - \rho_1 A_{12}'(\delta_{12}p_{12}^2 + 2\delta_1 p_{12}p_{13})\right] \qquad (17)$$

Let $\mathbf{P}^3$ be the projective space with coordinates $(\delta_1, \delta_2, \delta_3, \delta_{12})^\mathsf{T}$. Equation (16) is homogeneous in the components $\delta_1$, $\delta_2$, $\delta_3$ and $\delta_{12}$ of $D$. It thus defines a cubic surface in $\mathbf{P}^3$.

On solving the second and fourth equations of (14) for $\delta_{23}$ the following two equations are obtained.

$$\delta_{23}(A'_{12}p^2_{13} - \rho_1 A_{12}p'^2_{13}) \;=\; \rho_1 A_{12}(\delta_{12}p'^2_{11} + 2\delta_2 p'_{11}p'_{13}) - A'_{12}(\delta_{12}p^2_{11} + 2\delta_2 p_{11}p_{13})$$

$$\delta_{23}(B'_{12}p^2_{23} - \rho_2 B_{12}p'^2_{23}) \;=\; \rho_2 B_{12}(\delta_{12}p'^2_{21} + 2\delta_2 p'_{21}p'_{23}) - B'_{12}(\delta_{12}p^2_{21} + 2\delta_2 p_{21}p_{23}) \qquad (18)$$

On eliminating $\delta_{23}$ from the equations of (18) a cubic equation

$$c_2(\delta_1,\delta_2,\delta_3,\delta_{12}) = 0 \qquad\qquad (19)$$

is obtained, where $c_2$ is defined by

$$c_2 \;=\; (A'_{12}p^2_{13} - \rho_1 A_{12}p'^2_{13})\left[\rho_2 B_{12}(\delta_{12}p'^2_{21} + 2\delta_2 p'_{21}p'_{23}) - B'_{12}(\delta_{12}p^2_{21} + 2\delta_2 p_{21}p_{23})\right]$$

$$-(B'_{12}p^2_{23} - \rho_2 B_{12}p'^2_{23})\left[\rho_1 A_{12}(\delta_{12}p'^2_{11} + 2\delta_2 p'_{11}p'_{13}) - A'_{12}(\delta_{12}p^2_{11} + 2\delta_2 p_{11}p_{13})\right] \quad (20)$$

Equation (19) defines a second cubic surface in $\mathbf{P}^3$.

The intersection $c_1 \cap c_2$ contains two skew lines $a_1$, $a_2$, where $a_1$ is defined by $A_{12} = A'_{12} = 0$, and $a_2$ is defined by $B_{12} = B'_{12} = 0$. Two cubic surfaces intersect in a space curve of degree $3 \times 3 = 9$. It follows that $c_1 \cap c_2$ splits into the two lines $a_1$, $a_2$, and a space curve $c$ of degree seven. The lines $a_1$, $a_2$ occur in $c_1 \cap c_2$ because of the way in which the variables $\delta_{13}$, $\delta_{23}$ are eliminated from (14). The points of $a_1$ and $a_2$ do not yield conics $\omega$ in the image plane such that the tangents drawn from $p_i$ to $\omega$ correspond to the tangents drawn from $p'_i$ to $\omega$, $i = 1,2$. The space of conics for which the tangents do correspond is parameterised by $c$.

There remains the possibility that $c_1 \cap c_2$ splits into more than three components. A series of numerical examples contructed using the Mathematica computer algebra program [11] show that $c_1$ and $c_2$ are in general non-singular and that $c_1 \cap c_2$ in general splits into two lines and an irreducible space curve of degree seven.

# 4 Properties of the curve parameterising the calibrations

It has been shown in §3 that the camera calibrations compatible with two epipolar transformations are parameterised by a space curve $c$ of degree seven obtained as part of the intersection of two cubic surfaces $c_1$ and $c_2$. Some properties of $c$ are obtained in this section. It is shown in §4.1 that $c$ has genus four, and in §4.2 certain lines contained in $c_1$ or $c_2$ that intersect $c$ are described.

## 4.1 The genus

The genus of $c$ is obtained from a standard formula for the genus of a curve occurring as part of the intersection of two surfaces in $\mathbf{P}^3$. As explained in §3, the intersection $c_1 \cap c_2$ of the two cubic surfaces splits into three components, the two lines $a_1$, $a_2$ and the space curve $c$ of degree seven. The degrees of the three components $a_1$, $a_2$, $c$ of $c_1 \cap c_2$ are denoted by $n_1$, $n_2$ and $n_3$ respectively. It follows that $n_1 = 1$, $n_2 = 1$, $n_3 = 7$. Let $r_i$, $p_i$ be the rank and genus of the $i$th component of $c_1 \cap c_2$, and let $i_{ij}$, $(i \neq j)$ be the number of intersections between the $i$th component and the $j$th component of $c_1 \cap c_2$ ($i_{ij} = i_{ji}$). The rank of a space curve is, by definition, the number of tangents to the curve that meet a general line [8]. If two surfaces in $\mathbf{P}^3$ of degrees $N_1$ and $N_2$ intersect in a space curve which splits into three components then

$$r_1 + i_{12} + i_{13} = n_1(N_1 + N_2 - 2)$$

$$r_2 + i_{23} + i_{21} = n_2(N_1 + N_2 - 2) \qquad (21)$$

$$r_3 + i_{31} + i_{32} = n_3(N_1 + N_2 - 2)$$

The equations (22) are taken from [8 Chapter IV §8.3]. On substituting into (22) the numbers $n_1 = n_2 = 1$, $n_3 = 7$, $i_{12} = 0$, $N_1 = N_2 = 3$, $r_1 = r_2 = 0$, the following equations are obtained,

$$i_{13} = i_{23} = 4$$

$$r_3 + i_{31} + i_{32} = 28 \qquad (22)$$

The first two equations of (22) show that $c$ intersects $a_1$ and $a_2$ in four points. It follows from (22) that $r_3 = 28 - 8 = 20$. The rank, genus and degree of a space curve are connected by the equation $r_3 = 2n_3 + 2p_3 - 2$. It follows that $p_3 = 4$.

Strictly speaking, the argument just given establishes that $p_3$ is at most four. There remains the possibility that there exist constraints in the calibration problem which have been overlooked, and which lead to a reduction in the genus of $c$. This possibility is excluded by constructing a single numerical example in which the genus of $c$ is exactly four. This can be done using Mathematica.

## 4.2 Lines intersecting $c$

A non-singular cubic surface in $\mathbf{P}^3$ contains exactly 27 lines [8]. Certain of the lines contained in $e_1$ or $e_2$ can be obtained quickly from (17) or (20), for example, the skew lines $a_1$ and $a_2$. In the course of calculating the genus of $c$ in §4.1 it is shown that the lines $a_1$, $a_2$ each intersect $c$ four times. They are the only lines in $\mathbf{P}^3$ with this property. To prove this, let $k$ be any line of $\mathbf{P}^3$ that intersects $c$ four times. Then $l$ meets each surface $e_1$, $e_2$ four times. It follows that $l$ is a component of $e_1 \cap e_2$. The only possibilities are either $l = a_1$ or $l = a_2$.

Two skew lines contained in a cubic surface have exactly five transversals which are also contained in the surface. Let $l_i$, $1 \le i \le 5$, be the transversals of $a_1$, $a_2$ contained in $e_1$. Each plane $(a_1, l_i)$ meets $e_1$ in a cubic curve which splits into three lines, two of which are $a_1$ and $l_i$. Let $k_i$ be the third component of $(a_1, l_i) \cap e_1$, $1 \le i \le 5$. The set $l_i \cap e_2$ consists of three points. One of these points is on $a_1$, and another is on $a_2$. The remaining point is on $c$. It follows that each line $l_i$ intersects $c$ once only. The set $k_i \cap e_2$ consists of three points, one of which is on $a_1$. The remaining two points are on $c$. Each line $k_i$ thus meets $c$ twice. A similar argument shows that there exist lines $l_i'$, $k_i'$, $1 \le i \le 5$ contained in $e_2$ such that each line $l_i'$ is a transversal of $a_1$ and $a_2$, and each line $k_i'$ is a transversal of $a_1$ and $l_i'$. Each line $l_i'$ intersects $c$ once, and each

line $k_i'$ intersects $c$ twice.

It follows from (17) that $c_1$ contains the intersection of the two surfaces

$$\rho_1 A_{12}' p_{13}^2 - A_{12} p_{13}'^2 = 0$$

$$A_{12}(\delta_{12} p_{12}'^2 + 2\delta_1 p_{12}' p_{13}') - \rho_1 A_{12}'(\delta_{12} p_{12}^2 + 2\delta_1 p_{12} p_{13}) = 0 \qquad (23)$$

In fact, the equations (23) define a line $k$ in $\mathbf{P}^3$ because they can be written in the form

$$\rho_1 A_{12}' p_{13}^2 - A_{12} p_{13}'^2 = 0$$

$$2\delta_1 + \delta_{12}\left(\frac{p_{12}'}{p_{13}'} + \frac{p_{12}}{p_{13}}\right) = 0 \qquad (24)$$

The line $k$ and the line $a_1$ are both contained in the plane defined by the first equation of (24), thus $k$ intersects $a_1$. The line $k$ is skew to $a_2$. A line in a non-singular cubic surface intersects exactly ten other lines contained in the surface [3,5]. It follows that the ten lines in $c_1$ intersecting $a_1$ are precisely the lines $l_i$, $k_i$, $1 \le i \le 5$. The line $k$ is thus one of the lines $k_i$. The labelling of the $k_i$ is chosen such that $k = k_1$.

Similarly, it follows from (20) that $c_2$ contains the line $k'$ defined by

$$A_{12}' p_{13}^2 - \rho_1 A_{12} p_{13}'^2 = 0$$

$$\rho_1 A_{12}(\delta_{12} p_{11}'^2 + 2\delta_2 p_{11}' p_{13}') - A_{12}'(\delta_{12} p_{11}^2 + 2\delta_2 p_{11} p_{13}) = 0 \qquad (25)$$

The equations of (25) are equivalent to

$$A_{12}' p_{13}^2 - \rho_1 A_{12} p_{13}'^2 = 0$$

$$2\delta_2 + \delta_{12}\left(\frac{p_{11}'}{p_{13}'} + \frac{p_{11}}{p_{13}}\right) = 0 \qquad (26)$$

The line $k'$ is one of the $k_i'$. The labelling of the $k_i'$ is chosen such that $k' = k_1'$.

The lines $a_1$, $k_1$, $k_1'$ are concurrent. This is proved as follows. A short calculation shows that the following six homogeneous equations in the six variables $\delta_i$, $\delta_{ij}$ have a unique solution.

$$A_{11} = A_{12} = A_{22} = 0$$

$$A_{11}' = A_{12}' = A_{22}' = 0 \qquad (27)$$

16

Let v be the point in the space $\mathbf{P}^3$ spanned by $\delta_1$, $\delta_2$, $\delta_3$, $\delta_{12}$, for which the equations of (27) have a solution. It follows from the definitions of $a_1$, $k_1$, $k_1'$ that all three lines contain v. The point v is given explicitly by

$$
\begin{aligned}
\mathbf{v} &= \left( -\frac{1}{2}(\frac{p_{12}'}{p_{13}} + \frac{p_{12}}{p_{13}}), -\frac{1}{2}(\frac{p_{11}'}{p_{13}} + \frac{p_{11}}{p_{13}}), -\frac{p_{12}p_{11}' + p_{11}p_{12}'}{2p_{13}p_{13}'}, 1 \right)^{\mathsf{T}} \\
&= (p_{12}'p_{13} + p_{12}p_{13}', p_{11}'p_{13} + p_{11}p_{13}', p_{11}'p_{12} + p_{12}'p_{11}, -2p_{13}p_{13}')^{\mathsf{T}} \qquad (28)
\end{aligned}
$$

# 5   A representation as a curve of degree six

The representation of the curve $c$ parameterising the camera calibrations compatible with two epipolar transformations obtained in §3.2 has at least three disadvantages. It is a space curve rather than a plane curve, the degree of the curve is seven, which is higher than necessary for the representation of a curve of genus four, and finally the representation depends on a particular choice of coordinates in the image plane. In this section a representation of $c$ as a plane curve of degree six is obtained, which does not depend on the choice of a special coordinate system.

## 5.1   Equation of the curve: method 1

The space curve $c$ of degree seven obtained in §3.2 is projected from the point v found in §4.2 to give a plane curve $c'$ of degree seven. Let $\mathbf{a}_1$, $\mathbf{a}_2$, $\mathbf{a}_3$ be the projections of the lines $a_1$, $k_1$, $k_1'$ respectively. The curve $c$ intersects $a_1$ four times, and it intersects $k_1$ and $k_1'$ twice each. It follows that $c'$ has a singular point of order four at $\mathbf{a}_1$, and nodes (singular points of order two) at $\mathbf{a}_2$ and $\mathbf{a}_3$. The curve $c'$ has three additional nodes, but they are not required for this argument.

Let $\Phi$ be a quadratic transformation with fundamental points at $\mathbf{a}_1$, $\mathbf{a}_2$, $\mathbf{a}_3$, and let $\mathbf{b}_1$, $\mathbf{b}_2$, $\mathbf{b}_3$ be the images of the lines $\langle \mathbf{a}_2, \mathbf{a}_3 \rangle$, $\langle \mathbf{a}_3, \mathbf{a}_1 \rangle$, $\langle \mathbf{a}_1, \mathbf{a}_2 \rangle$ under $\Phi$. The points $\mathbf{b}_i$ are the fundamental points of $\Phi^{-1}$. In the notation of [8 Chapter IX], the curve $c'$ is of type $C^7(\mathbf{a}_1^4, \mathbf{a}_2^2, \mathbf{a}_3^2)$. This

means that $c'$ has degree 7, a singular point of order 4 at $a_1$, and nodes at $a_2$ and $a_3$. Let $c'' = \Phi(c')$. The curve $c''$ is then of type

$$C^{2 \cdot 7 - 4 - 2 - 2}(\mathbf{b}_1^{7-2-2}, \mathbf{b}_2^{7-4-2}, \mathbf{b}_3^{7-4-2}) = C^6(\mathbf{b}_1^3, \mathbf{b}_2, \mathbf{b}_3)$$

This means that $c''$ is of degree six, with a singular point of order three at $\mathbf{b}_1$. The points $\mathbf{b}_2$ and $\mathbf{b}_3$ are on $c''$, but they are not singular points of $c''$. The curve $c''$ has three additional nodes which are the images of nodes of $c'$ under $\Phi$.

## 5.2 Equation of the curve: method 2

A second method for obtaining a representation of $c$ as a plane curve of degree six is described. Let $s_1$ be the conic defined in §3.2. A point $y$ is on $s_1$ if and only if $(\mathbf{p}_1, y)\overline{\Lambda}_1(\mathbf{p}_1', y)$. Let $l$ be a variable chord of $s_1$ such that $l \cap s_1 = \{x_1, x_2\}$, and such that the epipolar lines $\langle \mathbf{p}_1, x_1 \rangle$, $\langle \mathbf{p}_1, x_2 \rangle$ are both tangent to a conic $\omega$ obtained from a point of $c$. The locus $g$ of $l$ in the dual to the image plane is a curve of degree six related to the curve $c''$ obtained in §5.1 by a collineation.

The proof that $c''$ is collinearly related to $g$ is based on certain cones $\psi_r$ defined in the space $\mathbf{P}^3$ containing $c$. Let $\mathbf{a}(r)$ be a parameterisation of $s_1$, such that the components $a_i(r)$ of $\mathbf{a}(r)$ are of degree at most two in $r$. The conics $\mathrm{Dual}(\omega)$ compatible with the first epipolar transformation such that $\omega$ is tangent to $\langle \mathbf{p}_1, \mathbf{a}(r) \rangle$ are obtained by solving the equations

$$A_{11} + 2A_{12}r + A_{22}r^2 = 0$$

$$A_{11}' + 2A_{12}'\rho_1 r + A_{22}'\rho_1^2 r^2 = 0$$

$$\frac{A_{11}}{A_{12}} = \frac{A_{11}'}{\rho_1 A_{12}'} \tag{29}$$

Only one of Kruppa's equations (11) is chosen because the other equation depends on the three equations of (29). The first two equations of (29) are solved for $\delta_{13}$, $\delta_{23}$ and the resulting expressions substituted into the third equation of (29) to yield a quadric $\psi_r$ in the space $\mathbf{P}^3$

parameterised by $\delta_1, \delta_2, \delta_3, \delta_{12}$. The points of $\psi_\tau \cap c$ that vary with $\tau$ yield the conics $\omega$ tangent to $(p_1, a(\tau))$ that are compatible with both epipolar transformations.

The quadrics $\psi_\tau$ contain the lines $a_1, k_1, k_1'$ found in §4.2. It follows that $\psi_\tau$ is a cone with vertex $v$ independent of $\tau$. The cone $\psi_\tau$ depends quadratically on $\tau$. Numerical examples can be constructed using Mathematica to show that $\psi_\tau$ does not, in general, split into a plane pair.

Let $u$ be a point in the dual to the image plane and let $a(\tau_1)$, $a(\tau_2)$ be the two points at which the line $u.x = 0$ intersects $s_1$. The values of $\tau_1$ and $\tau_2$ are obtained by solving a quadratic equation in $\tau$, namely, $u.a_\tau = 0$. The quadratic equation has the form

$$r_0 + r_1\tau + r_2\tau^2 = 0 \tag{30}$$

where the coefficients $r_i$ depend linearly on $u$. It follows from (30) that

$$\tau_1 + \tau_2 = -\frac{r_1}{r_2} \qquad\qquad \tau_1\tau_2 = \frac{r_0}{r_2} \tag{31}$$

The points $a(\tau_1)$, $a(\tau_2)$ of $s_1$ give rise to cones $\psi_{\tau_1}$, $\psi_{\tau_2}$ in $\mathbf{P}^3$. These cones project to conics $s(\tau_1)$, $s(\tau_2)$ in the plane of $c'$. The conics $s(\tau_1)$, $s(\tau_2)$ transform under $\Phi$ to the lines $h(\tau_1)$, $h(\tau_2)$ in the plane of $c''$. Let $x = (x, y, z)^\top$ be a general point in the plane of $c''$. Let the lines $h(\tau)$ have the form $h(\tau).x = 0$. The vector $h(\tau)$ (in the dual to the plane of $c''$) depends quadratically on $\tau$, thus

$$h_\tau = 1 + \tau m + \tau^2 n \tag{32}$$

where $l, m, n$ are constant vectors calculated from $\Phi$, and the equation for $\psi_\tau$. It follows from (32) that the lines $h(\tau_1)$, $h(\tau_2)$ intersect at the point $p$ in $\mathbf{P}^2$ defined by

$$
\begin{aligned}
p &= h(\tau_1) \times h(\tau_2) \\[4pt]
&= (1 + \tau_1 m + \tau_1^2 n) \times (1 + \tau_2 m + \tau_2^2 n) \\[4pt]
&= (\tau_1 - \tau_2)l \times m + (\tau_1^2 - \tau_2^2)l \times n + (\tau_1^2\tau_2 - \tau_1\tau_2^2)m \times n \\[4pt]
&= l \times m + (\tau_1 + \tau_2)l \times n + \tau_1\tau_2 m \times n \tag{33}
\end{aligned}
$$

The factor $r_1 - r_2$ is cancelled from the last equation of (33) because p is a point of $\mathbf{P}^2$. On using (31) to substitute for $r_1 + r_2$ and $r_1 r_2$ in (33) the following expression for p is obtained,

$$p = r_0 m \times n + r_1 n \times l + r_2 l \times m \qquad (34)$$

It follows from (34) and the definition of the $r_i$ in (30) that p is a linear function of u.

Let $A$ be a $3 \times 3$ matrix such that $p = Au$. The line $u.x = 0$ in the image corresponds to a point u of the dual curve $g$ if and only if the epipolar lines $\langle p_1, a(r_1) \rangle$ and $\langle p_1, a(r_2) \rangle$ are both tangent to a single conic $\omega$ compatible with the two epipolar transformations. If u is a point of $g$ then the point p at which $h(r_1)$ and $h(r_2)$ intersect is a point of $c''$. It follows that u is subject to the constraint $c''(Au) = 0$. This is the equation of $g$. The advantage of $g$ over $c''$ is that the equation for $g$ can be obtained using Mathematica without first choosing a special coordinate system in the image plane.

## 6 Calibration using three epipolar transformations

If three epipolar transformations are given then it is possible to determine the camera calibration uniquely. In fact, the number of constraints, six, is greater than the number five of degrees of freedom for the camera calibration. The curve $g$ obtained in §5.2 is the basis for one possible method of obtaining the camera calibration.

Let $g_{12}$ be the curve obtained from the first and second epipolar transformations, and let $g_{13}$ be the curve obtained from the first and third epipolar transformations. Each curve $g_{12}$, $g_{13}$ has a singular point of order three. It can be shown that the singular point corresponds to the chord $\langle p_1, p_1' \rangle$ of $s_1$. It thus depends only on the first epipolar transformation. This observation simplifies the task of finding the points of $g_{12} \cap g_{13}$. There are 36 points in $g_{12} \cap g_{13}$, counted with the correct multiplicities, but nine of them are accounted by the common singular point of order three. The remaining 27 points can be found using routines from Mathematica or from

the NAG library. The correct camera calibration is selected from the 27 candidates by checking that the epipolar lines tangent to the image of the absolute conic correspond correctly.

Experiments are to be carried out to assess the feasibility of this method of camera calibration in practice.

**Acknowledgement.** This work was carried out as part of the Esprit Project Voilà (P2502).

# References

1. R. Deriche & O.D. Faugeras (1990) Tracking line segments. *Image and Vision Computing* **8** 261-270. A shorter version appeared in the Proceedings of the 1st ECCV, Antibes, 1990.

2. O.D. Faugeras & S.J. Maybank (1990) Motion from point matches: multiplicity of solutions. *The International Journal of Computer Vision*, **4** 225-246 and also INRIA Technical Report 1157.

3. O.D. Faugeras. (1991) *Three-Dimensional Computer Vision*. MIT Press, to appear.

4. B.K.P. Horn (1986) *Robot Vision*. MIT Press.

5. E. Kruppa (1913) Zur Ermittlung eines Objektes aus zwei Perspektiven mit innerer Orientierung. *Sitz.-Ber. Akad. Wiss., Wien, math. naturw. Kl., Abt. IIa.*, **122** 1939-1948.

6. S.J. Maybank (1990) The projective geometry of ambiguous surfaces. *Philosophical Transactions of the Royal Society, London, Series A* **332** 1-47.

7. J.G. Semple & G.T. Kneebone (1952) *Algebraic Projective Geometry*. Oxford: Clarendon Press. Reprinted 1979.

8. J.G. Semple & L. Roth (1949) *Introduction to Algebraic Geometry*. Oxford University Press. Reprinted by Oxford Science Publications, 1985.

9. R.Y. Tsai (1987) An efficient and accurate camera calibration technique for 3D machine vision. In *Proceedings of the IEEE International Conference on Computer Vision and Pattern*

*Recognition*, Miami Beach, Florida, 364-374.

10.  R.Y. Tsai & R.K. Lenz (1988) A new technique for fully autonomous and efficient 3D robotics hand-eye calibration. *Robotics Research* 4, MIT Press.

11.  S. Wolfram (1988) *Mathematica, a system for doing mathematics by computer*. Addison Wesley.

## Claims

1.  A computer vision system incorporating means associated with the system camera for determining the epipolar transformation between a pair of images corresponding to different camera positions, so as to produce measurement signals representative thereof, and a conversion circuit capable of deriving from said signals by means of Kruppa equations respective camera calibration signals, and using said calibration signals to calibrate the camera.

2.  A computer vision system according to Claim 1 having means for determining the epipolar transformations repeatedly so as to produce a sequence of measurement signals, and in which the conversion circuit is arranged to derive therefrom a sequence of calibration signals, so as to update the cameral calibration on a continuous basis as the camera moves.

3.  A computer vision system according to Claim 1 having means for determining the epipolar transformations n times, and in which the conversion circuit is arranged to calibrate the camera once only after accumulating said n epipolar transformations.

4.  A computer vision system in which camera calibration is based on the relation between epipolar transformation and the absolute conic.

5.  A computer vision system incorporating means for determining the epipolar transformation between a pair of images corresponding to different camera positions, means for deriving therefrom measurement signals representative thereof, means for feeding said signals to a computer circuit programmed to derive from the signals, by means of Kruppa equations, respective calibration signals, and means for utilising said calibration signals to calibrate the camera.

Figure 1: The epipolar
transformation

Figure 2.

```
      obtain n epipolar
    transformations (ET)
```

```
    for each ET obtain
      Kruppa's eqns
```

```
  use the n sets of Kruppa eqns
      to update the estimate
        of the calibration
```